# EUROPEAN PATENT SPECIFICATION

(11) **EP 2 844 924 B1**
(45) Date of publication and mention of the grant of the patent: **03.04.2019**
(21) Application number: 13708607.0
(22) Date of filing: 26.02.2013
(51) Int. Cl.: F24F 5/00, F24F 11/00

(54) **AIR CONDITIONING SYSTEM HAVING SUPERCOOLED PHASE CHANGE MATERIAL**
KLIMAANLAGE MIT SUPERGEKÜHLTEM SPEICHERSTOFF
SYSTÈME DE CLIMATISATION AYANT UN MATÉRIAU À CHANGEMENT DE PHASE SURREFROIDI

(30) Priority: 03.05.2012 US 201261642072 P
(43) Date of publication of application: 11.03.2015
(73) Proprietor: Carrier Corporation, Farmington, CT 06034 (US)
(72) Inventor: DOBBS, Gregory M., Kendall Park, NJ 08824 (US)
(74) Representative: Schmitt-Nilson Schraud Waibel Wohlfrom Patentanwälte Partnerschaft mbB
(86) International application number: PCT/US2013/027745
(87) International publication number: WO 2013/165535

(56) References cited:
- EP-A1- 2 211 123
- EP-A1- 2 343 486
- EP-A1- 2 420 758
- WO-A1-2009/101398
- WO-A2-2008/011540
- WO-A2-2008/014295
- JP-A- 2002 081 767

## Description

### BACKGROUND

The subject matter disclosed herein generally relates to air conditioning systems, and in particular relates to an air conditioning system utilizing supercooled phase chase material to store thermal energy.

Existing air conditioning systems employ phase change materials to improve capacity and/or efficiency of the system. Exemplary air conditioning systems include energy storage systems which freeze a phase change material when energy costs are relatively low (e.g., non-peak rates). The phase change material is then used to absorb thermal energy during other modes of operation to improve efficiency and/or capacity of the air conditioning system. WO 2008/014295 discloses an air conditioning system comprising: a chiller system including a compressor, a condenser, an expansion device and an evaporator; a phase change material and an actuator coupled to the phase change material.

WO 2009/101398 A1 discloses a transportable phase change material (PCM) module comprising a number of PCM packs; a housing for thermally insulting said number of PCM packs from a module's surrounding medium; and spaces separating said packs and forming one or more channels for the flow of a fluid; said housing incorporating a fluid inlet and a fluid outlet, whereby, in use, fluid flows through said channels from said inlet to said outlet. A PCM pack comprises a laminate of a first conducting panel and a second conducting panel enclosing a portion formed primarily of PCM, wherein said portion of PCM incorporates thermal conductors.

An active thermal insulation system is disclosed in WO 2008/011540 A2. The system utilizes a cool air source or ambient air below a threshold temperature in conjunction with a phase change material and/or conventional insulation. In a controlled manner, the cooled air or ambient air facilitates the transition of the phase change material from a substantially liquid state to a substantially solid state allowing the solid phase change material to absorb heat. Cooled air or ambient air may be directed to the phase change material via a gap or plenum capable of introducing the cooled air or ambient air adjacent to the phase change material. A fan, blower or air intake device may be used to direct ambient air to the gap or plenum.

### SUMMARY

One embodiment is an air conditioning system which includes a chiller system including a compressor, a condenser, an expansion device and an evaporator; a phase change material in thermal communication with the condenser; an actuator coupled to the phase change material; and a controller providing a trigger signal to the actuator to initiate changing the phase change material from a supercooled state to a solid state.

Another exemplary embodiment is a method for operating an air conditioning system having a chiller system including a compressor, a condenser, an expansion device and an evaporator, a phase change material in thermal communication with the condenser, and an actuator coupled to the phase change material, the method including determining whether an ambient temperature profile will result in supercooling of the phase change material; and in response to the determining, triggering the actuator to initiate changing the phase change material from a supercooled state to a solid state.

Other exemplary embodiments and features are described herein.

### BRIEF DESCRIPTION OF THE DRAWINGS

FIG. 1 depicts an air conditioning system in an exemplary embodiment.
FIG. 2 depicts a condenser coil assembly in an exemplary embodiment.
FIG. 3 depicts an actuator in an exemplary embodiment.
FIG. 4 is an plot of temperature versus time, illustrating phase change material state changes in an exemplary embodiment.
FIG. 5 is a flowchart of a control process in an exemplary embodiment.

### DETAILED DESCRIPTION

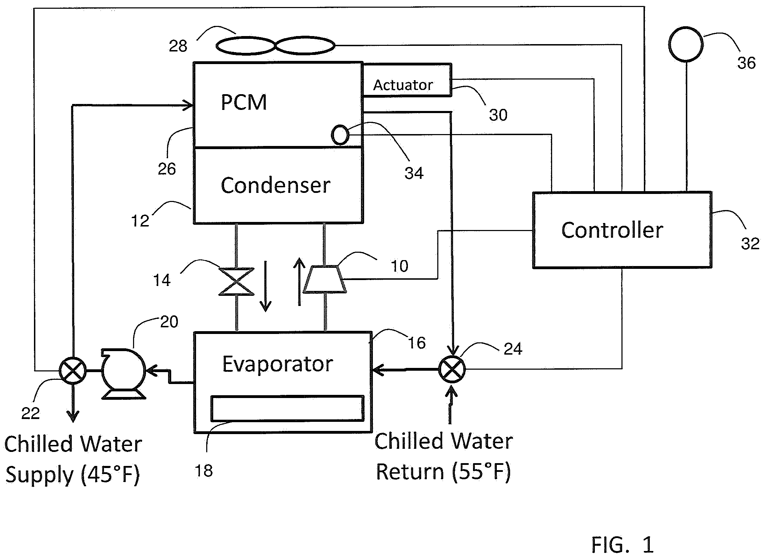

FIG. 1 depicts an air conditioning system in an exemplary embodiment. A chiller system includes a compressor 10, a first heat exchanger 12, an expansion device 14 and a second heat exchanger 16. The first heat exchanger 12 may be used as a condenser coil, and may be located outside of a building or space to be conditioned. The second heat exchanger 16 may be used as an evaporator coil. As known in the art, refrigerant is subjected to a vapor compression cycle through compressor 10, condenser 12, expansion device 14 and evaporator 16. Heat is absorbed at evaporator 16 and heat is discharged at condenser 12.

The system of FIG. 1 may be a water chiller system. Evaporator 16 is in thermal communication with a heat exchanger 18 (e.g., a coil) that carries a fluid coolant, e.g., water. A supply pump 20 circulates coolant from heat exchanger 18 cooled by evaporator 16 to a supply valve 22. Supply valve 22 supplies chilled water (about 45° F) to a local zone terminal where a fan draws air over a coil to chill a space as known in the art. A return valve 24 receives fluid returned from the local zone terminal and provides the return fluid to heat exchanger 18. It is understood that embodiments of the invention may be used with other types of air conditioning systems (e.g., forced air) and embodiments are not limited to water chiller systems.

Condenser coil 12 is in thermal communication with a phase change material 26. Condenser coil 12 may be fully embedded in the phase change material 26 or the phase change material may be in a housing containing condenser coil 12. Alternatively, a portion of the condenser coil may be exposed to ambient air. A fan 28 may draw air through the phase change material 26 to aid in cooling the phase change material 26. In exemplary embodiments, phase change material 26 is a material that achieves a supercooling state. A controller 32 then initiates the transition of the phase change material 26 from supercooled liquid to solid. An actuator 30 is used to initiate the transition of the phase change material 26 from supercooled liquid to solid when the phase change material 26 is in a supercooled state, as described in further detail herein.

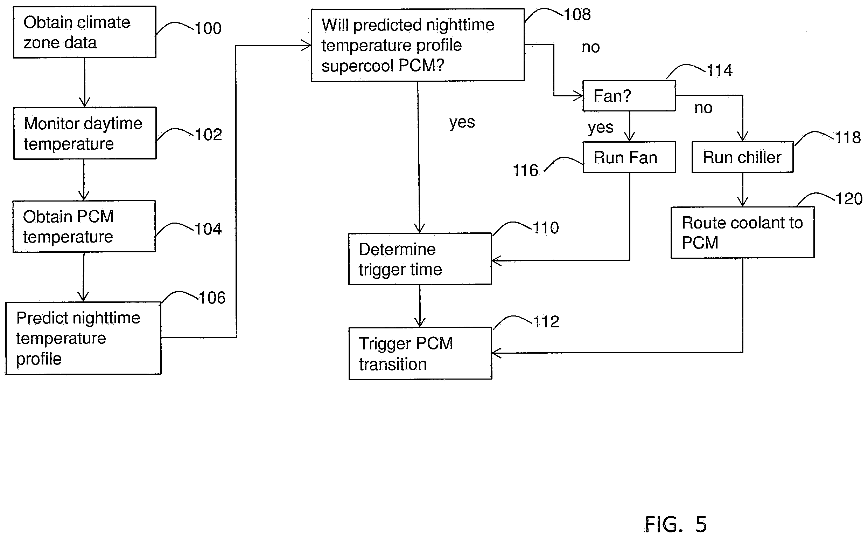

A controller 32 controls operation of the system. Controller 32 may be implemented using a general purpose microprocessor executing computer code stored in a storage medium for performing the functions described herein. Controller 32 receives a phase change material temperature signal from a phase change material sensor 34 in thermal contact with phase change material 26. Controller 32 also receives an ambient temperature signal from an ambient temperature sensor 36. Ambient temperature sensor 36 may monitor the outside air temperature in the vicinity of condenser 12. Controller 32 may send control signals to compressor 10, pump 20, supply valve 22, return valve 24, fan 28 and actuator 30. Operation of the system is described in further detail herein with reference to FIG. 5.

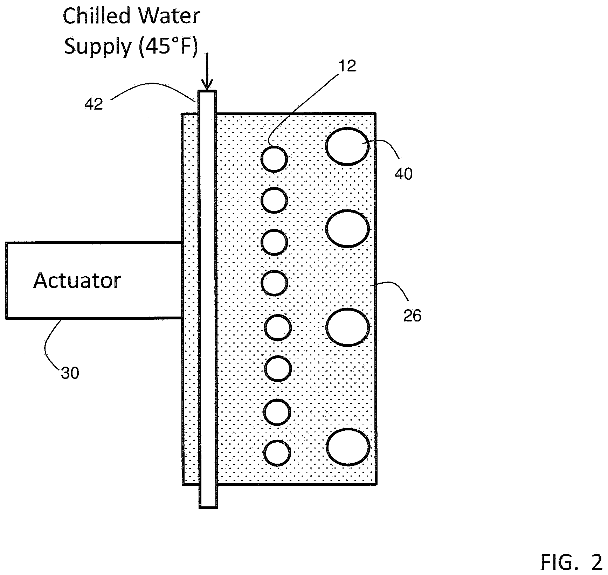

FIG. 2 depicts a condenser assembly in an exemplary embodiment. Condenser coil 12 is in thermal communication with phase change material 26. In the embodiment of FIG. 2, the condenser coil 12 is embedded in phase change material 26. In other embodiments, a portion of condenser coil 12 may extend beyond the phase change material 26, such that the entire condenser coil 12 is not embedded in the phase change material 26. Air paths 40 are formed in the phase change material 26 to allow air to be drawn through the phase change material 26 by fan 28. The air paths may be arranged in a variety of configurations, and embodiments are not limited to the arrangement shown in FIG. 2. Controller 32 may turn fan 28 on when additional ambient airflow is needed to cool the phase change material 26.

A coolant supply line 42 is also in thermal communication with the phase change material 26, and may be embedded in the phase change material 26 as shown in FIG. 2. In situations where the ambient temperature is insufficient to adequately cool the phase change material 26 (e.g., to a supercooled state), controller 32 may direct chilled coolant from supply valve 22 to the phase change material 26 and back to return valve 24. Controller 32 activates compressor 10 to produce chilled coolant in coil 18. Controller 32 sets valves 22 and 24 to route chilled coolant to the phase change material 26 and pump 20 is activated circulate the chilled coolant to the phase change material 26.

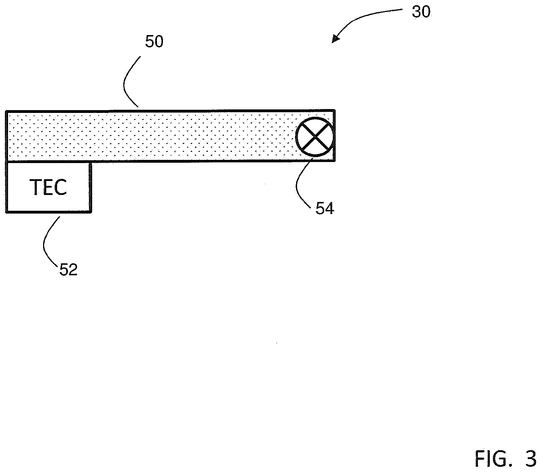

FIG. 3 depicts an actuator 30 in an exemplary embodiment. Actuator 30 is controlled by controller 32 to initiate a transition from supercooled, liquid phase change material to solid phase change material. Supercooled, as used herein, refers to the phase change material 26 being in a liquid state and at a temperature below the phase change material freezing temperature. The actuator in FIG. 3 includes a tube 50 of phase change material and a thermoelectric cooler 52 that maintains the phase change material in tube 50 in a frozen or solid state under all conditions. Valve 54 connects the tube 50 to the main reservoir of phase change material 26. Controller 32 opens valve 54 to trigger freezing of the main phase change material reservoir 26. When valve 54 is opened, some of the unfrozen liquid in phase change material 26 flows toward the frozen volume in tube 50 and begins to freeze. The freeze front moves outward from the valve area to the rest of the phase change material 26 as the latent heat is released. Another embodiment of actuator 30 includes an ultrasonic emitter to produce ultrasonic sound waves to trigger transition of the phase change material 26 from supercooled liquid to solid.

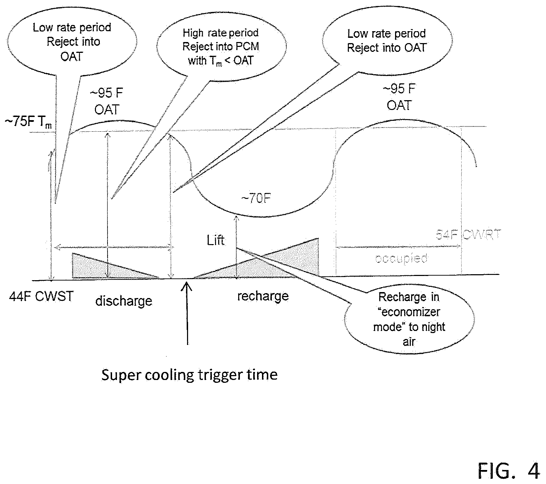

As described in further detail herein, the phase change material 26 is selected so that the phase change material transitions from liquid to solid when cooling demand on the chiller system is low or non-existent. This may occur in the evening, when ambient temperatures are lower. FIG. 4 illustrates an exemplary diurnal temperature versus time profile, along with states of the phase change material 26. In the example of FIG. 4, the outside air temperature ranges from about a 95°F day time high to about a 70°F night time low. If the transition temperature of the phase change material 26 is selected to be about 75°F, then the phase change material 26 will be frozen (or recharged) at night and then melt (or discharge) during the day. During the day, the frozen phase change material 26 absorbs energy from the condenser coil 12, improving the efficiency of condenser 12 when the chiller system is running and increasing efficiency and capacity of the chiller system.

FIG. 5 is a flowchart of a control process executed by controller 32 in an exemplary embodiment. The process begins at 100 where the controller 32 obtains climate zone data for the system. The climate zone data may be indicated by known climate maps and programmed into controller 32 upon installation of the air conditioning system. At 102, controller 32 monitors the ambient air temperature through ambient temperature sensor 36 and may store multiple ambient temperatures over time. At 104 controller 32 obtains the phase change material temperature from phase change material temperature sensor 34, and may store multiple phase change material temperatures over time.

At 106, controller 32 predicts a nighttime temperature profile based on the climate zone data and one or more ambient air temperature readings over time. Controller 32 may be preloaded with predicted nighttime temperature profiles indexed by climate zone data and daytime ambient air temperatures.

At 108, controller 32 determines if the predicted nighttime temperature profile will be sufficient to supercool the phase change material 26, based on one or more phase change material temperature measurements. For example, if the phase change material 26 transition temperature is about 75°F, the current phase change material temperature is about 80° F and the predicted nighttime temperature profile indicates four hours of ambient air temperature of about 72° F, then controller 32 may determine that the predicted nighttime temperature profile will result in the phase change material supercooling before the next chiller cycle is initiated (i.e., before the space being conditioned requires cooling). This determination will be affected by factors such as the amount of phase change material, its temperature transition characteristics, etc.

If the ambient temperature alone is sufficient to supercool the phase change material 26, flow proceeds to 110 where the controller determines a trigger time to transition the supercooled phase change material 26 from liquid to solid. Controller 32 attempts to trigger this transition when the ambient temperature is at or near a minimum value, so that the heat released by the phase change material 26 is more rapidly absorbed by the ambient air. At 112, controller sends a trigger signal to actuator 30 at the trigger time to initiate transition of the supercooled phase change material 26 to a solid.

If at 108 the predicted nighttime temperature profile is insufficient to supercool the phase change material 26, flow proceeds to 114 where it is determined if running fan 28 to draw ambient air through the phase change material 26 will result in supercooling of the phase change material 26. This determination may be made by controller 32 determining, based on the current phase change material temperature, that only a small temperature decrease is needed to supercool the phase change material 26. If so, fan 28 is turned on at 116 and flow proceeds to 110 and 112 as described above.

If at 114 controller 32 determines that the fan 28 will not supercool the phase change material, flow proceeds to 118 where controller 32 runs the chiller system including compressor 10 and pump 20. At 120, supply valve 22 and return valve 24 are set by controller 32 to direct coolant from coil 18 to the phase change material 26. Flow proceeds to 110 and 112 as described above.

Embodiments employ a phase change material that meets cost objectives but has a transition temperature high enough so that the nighttime temperature drops below the transition temperature each night. A phase change material is chosen that has a high propensity for supercooling. As the nighttime temperature drops below the starting temperature of the phase change material, sensible cooling takes place according to the heat capacity of the phase change material. When the nighttime temperature is near a minimum, the supercooled phase change material is triggered to release its latent heat quickly.

The temperature of the phase change material rises according to the heat capacity driven by the latent heat release until the limit of the melting temperature is reached. This provides a higher temperature difference between the outdoor air and the phase change material and the heat transfer from the phase change material to the outside air can occur at faster rates. The heat exchanger design can be optimize to take advantage of this rapid heat release. An example of a candidate phase change material with a transition temperature in the right region which is known to exhibit supercooling and which may be inexpensive enough is natural coconut fatty acid mixture.

Embodiments harness supercooling for positive uses by permitting the daytime heat captured in a medium to be released over a shorter period of cooler night air than otherwise would be possible. The difference in temperature created in the phase change material between the outdoor air temperature and the melting point temperature permits faster heat release to the environment and downsizing of the associated heat exchanger. This increases the viability of thermal energy storage from a cost/benefit perspective.

Chillers normally reject heat into hot outside air (95°F rating T) during periods of occupancy. The "lift" from the chilled water temperature (CWST) to the outside temperature (OAT) governs chiller efficiency, as illustrated in FIG. 4. The chiller may be off during most of the setback period during unoccupancy.

The advent of less expensive phase change materials that have a choice transition temperature (Tₘ) means that systems can be designed to pick the better of the OAT and Tₘ to reject heat during periods of occupancy, lowering the chiller lift and increasing chiller efficiency when electric rates are typically highest. The phase change material discharges throughout the day. During periods of unoccupancy at night when the chiller runs infrequently, the phase change material is recharged by cooler night air after the night air temperature drops below Tₘ in an "economizer" mode. Embodiments use a phase change material that exhibits supercooling so that when triggered, the phase change material temperature rises relative to the night air and the recharge goes faster. If necessary, the chiller system can assist so as to complete the recharge of the phase change material before morning occupancy. If the chiller system is needed, it will operate at lower lift than it would have during the day and use cheaper electricity.

While the invention has been described in detail in connection with only a limited number of embodiments, it should be readily understood that the invention is not limited to such disclosed embodiments. Accordingly, the invention is not to be seen as limited by the foregoing description, but is only limited by the scope of the appended claims.

## Claims

1. An air conditioning system comprising:
a chiller system including a compressor (10), a condenser (12), an expansion device (14) and an evaporator (16);
a phase change material (26) in thermal communication with the condenser (12);
an actuator (30) coupled to the phase change material (26); and
a controller (32) providing a trigger signal to the actuator (30) to initiate changing the phase change material (26) from a supercooled state to a solid state.

2. The air condition system of claim 1 wherein:
the condenser (12) is embedded in the phase change material (26).

3. The air condition system of claim 1 further comprising:
an ambient temperature sensor (36) providing an ambient temperature signal to the controller (32).

4. The air condition system of claim 1 further comprising:
a phase change material (26) sensor providing a phase change material (26) temperature signal to the controller (32).

5. The air condition system of claim 1 wherein:
the phase change material (26) includes an internal airway (40) for allowing ambient air to flow through the phase change material (26) the air condition system in particular comprising:
a fan (26) for drawing air through the airway (40).

6. The air condition system of claim 1 wherein: the phase change material (26) includes a coolant supply line (42) in thermal communication with the phase change material (26), the coolant supply line (42) coupled to the chiller system.

7. The air condition system of claim 1 wherein:
the actuator (30) generates a sound wave to initiate changing the phase change material (26) from the supercooled state to the solid state.

8. The air condition system of claim 1 wherein:
the actuator (30) includes frozen phase change material, the frozen phase change material being placed in contact with the phase change material (26) to initiate changing the phase change material (26) from the supercooled state to the solid state, wherein
the actuator (30) in particular includes a valve (54) separating the frozen phase change material from the phase change material (26), the controller (32) being configured for opening the valve (54) to initiate changing the phase change material (26) from the supercooled state to the solid state.

9. The air condition system of claim 1 wherein:
the controller (32) is configured for predicting a nighttime temperature profile in response to climate zone data and ambient temperature; and
the controller (32) is configured for determining if the phase change material (26) will supercool in response to the nighttime temperature profile.

10. The air condition system of claim 9 wherein:
the controller (32) is configured for providing the trigger signal to the actuator (30) in response to the nighttime temperature profile.

11. The air condition system of claim 9 wherein:
the phase change material (26) includes an internal airway (40) for allowing ambient air to flow through the phase change material (26); and
the controller (32) is configured for activating a fan (28) for drawing air through the airway (40) to supercool the phase change material (26) when the controller (32) determines that the phase change material (26) will not supercool in response to the nighttime temperature profile; or wherein:
the phase change material (26) includes a coolant supply line (42) in thermal communication with the phase change material (26), the coolant supply line (42) coupled to the chiller system; and
the controller (32) is configured for activating the chiller system to cool the coolant supply line (42) to supercool the phase change material (26), when the controller (32) determines that the phase change material (26) will not supercool in response to the nighttime temperature profile.

12. A method for operating an air conditioning system having a chiller system including a compressor (10), a condenser (12), an expansion device (14) and an evaporator (16), a phase change material (26) in thermal communication with the condenser (12), and an actuator (30) coupled to the phase change material (26), the method comprising:
determining whether an ambient temperature profile will result in supercooling of the phase change material (26); and
in response to the determining, triggering the actuator (30) to initiate changing the phase change material (26) from a supercooled state to a solid state.

13. The method of claim 12 wherein:
triggering the actuator (30) includes determining a trigger time in response to the ambient temperature profile and triggering the actuator (30) at the trigger time.

14. The method of claim 12 further comprising:
running a condenser fan (28) in response to determining that the ambient temperature profile will not result in supercooling of the phase change material (26); wherein the method in particular
further comprises
running the chiller system in response to determining that the ambient temperature profile will not result in supercooling of the phase change material (26) and the running the condenser fan (28) will not result in supercooling of the phase change material (26); wherein:
running the chiller system in particular includes cooling the phase change material (26) with coolant.

15. The method of claim 12 wherein:
determining whether the ambient temperature profile will result in supercooling of the phase change material (26) includes predicting a nighttime temperature profile in response to climate zone data, daytime temperature and a phase change material (26) temperature.

## Patentansprüche

1. Klimaanlage, Folgendes umfassend:
eine Kälteanlage, die einen Kompressor (10), einen Kondensator (12), eine Expansionsvorrichtung (14) und einen Verdampfer (16) umfasst;
ein Phasenübergangsmaterial (26) in thermischer Verbindung mit dem Kondensator (12);
einen Aktuator (30), der mit dem Phasenübergangsmaterial (26) gekoppelt ist; und
eine Steuerung (32), die dem Aktuator (30) ein Auslösesignal bereitstellt, um ein Ändern des Phasenübergangsmaterials (26) von einem unterkühlten Zustand in einen festen Zustand zu initiieren.

2. Klimaanlage nach Anspruch 1, wobei:
der Kondensator (12) in dem Phasenübergangsmaterial (26) eingebettet ist.

3. Klimaanlage nach Anspruch 1, ferner Folgendes umfassend:
einen Umgebungstemperatur-Sensor (36), der der Steuerung (32) ein Umgebungstemperatursignal bereitstellt.

4. Klimaanlage nach Anspruch 1, ferner Folgendes umfassend:
einen Phasenübergangsmaterial(26)-Sensor, der der Steuerung (32) ein Phasenübergangsmaterial-Temperatursignal bereitstellt.

5. Klimaanlage nach Anspruch 1, wobei:
das Phasenübergangsmaterial (26) einen internen Luftweg (40) hat, der es Umgebungsluft erlaubt, durch das Phasenübergangsmaterial (26) zu strömen, wobei die Klimaanlage insbesondere Folgendes umfasst:
ein Gebläse (26) zum Ansaugen von Luft durch den Luftweg (40) .

6. Klimaanlage nach Anspruch 1, wobei:
das Phasenübergangsmaterial (26) eine Kühlungsmittelzuführleitung (42) in thermischer Verbindung mit dem Phasenübergangsmaterial (26) aufweist, wobei die Kühlungsmittelzuführleitung (42) mit der Kälteanlage gekoppelt ist.

7. Klimaanlage nach Anspruch 1, wobei:
der Aktuator (30) eine Schallwelle erzeugt, um das Ändern des Phasenübergangsmaterials (26) von dem unterkühlten Zustand in den festen Zustand zu initiieren.

8. Klimaanlage nach Anspruch 1, wobei:
der Aktuator (30) das gefrorene Phasenübergangsmaterial beinhaltet, wobei das gefrorene Phasenübergangsmaterial im Kontakt mit dem Phasenübergangsmaterial (26) angeordnet ist, um das Ändern des Phasenübergangsmaterials (26) von dem unterkühlten Zustand in den festen Zustand zu initiieren, wobei
der Aktuator (30) insbesondere ein Ventil (54) umfasst, das das gefrorenen Phasenübergangsmaterial von dem Phasenübergangsmaterial (26) trennt, wobei die Steuerung (32) konfiguriert ist, das Ventil (54) zu öffnen, um das Ändern des Phasenübergangsmaterials (26) von dem unterkühlten Zustand in den festen Zustand zu initiieren.

9. Klimaanlage nach Anspruch 1, wobei:
die Steuerung (32) konfiguriert ist, in Reaktion auf Klimazonendaten und Umgebungstemperatur ein Nachttemperaturprofil vorherzusagen; und wobei
die Steuerung (32) dazu konfiguriert ist, zu bestimmen, ob das Phasenübergangsmaterial (26) als Reaktion auf das Nachttemperaturprofil unterkühlt wird.

10. Klimaanlage nach Anspruch 9, wobei:
die Steuerung (32) konfiguriert ist, dem Aktuator (30) als Reaktion auf das Nachttemperaturprofil das Auslösesignal bereitzustellen.

11. Klimaanlage nach Anspruch 9, wobei:
das Phasenübergangsmaterial (26) einen internen Luftweg (40) aufweist, der es Umgebungsluft erlaubt, durch das Phasenübergangsmaterial (26) zu strömen; und
die Steuerung (32) dazu konfiguriert ist, ein Gebläse (28) zum Ansaugen von Luft durch den Luftweg (40) zu aktivieren, um das Phasenübergangsmaterial (26) zu unterkühlen, wenn die Steuerung (32) in Reaktion auf das Nachttemperaturprofil bestimmt, dass das Phasenübergangsmaterial (26) nicht unterkühlt wird; oder wobei:
das Phasenübergangsmaterial (26) eine Kühlungsmittelzuführleitung (42) in thermischer Verbindung mit dem Phasenübergangsmaterial (26) aufweist, wobei die Kühlungsmittelzuführleitung (42) mit der Kälteanlage gekoppelt ist; und wobei
die Steuerung (32) konfiguriert ist, die Kälteanlage zu aktivieren, um die Kühlungsmittelzuführleitung (42) zu kühlen, um das Phasenübergangsmaterial (26) zu unterkühlen, wenn die Steuerung (32) in Reaktion auf das Nachttemperaturprofil bestimmt, dass das Phasenübergangsmaterial (26) nicht unterkühlt wird.

12. Verfahren zum Betreiben einer Klimaanlage, das eine Kälteanlage mit einem Kompressor (10), einem Kondensator (12), einer Expansionsvorrichtung (14) und einem Verdampfer (16), ein Phasenübergangsmaterial (26) in thermischer Verbindung mit dem Kondensator (12) und einen Aktuator (30) aufweist, der mit dem Phasenübergangsmaterial (26) gekoppelt ist, wobei das Verfahren Folgendes umfasst:
Bestimmen, ob ein Umgebungstemperaturprofil in einem Unterkühlen des Phasenübergangsmaterials (26) resultiert; und
als Reaktion auf das Bestimmen, Auslösen des Aktuators (30), um ein Ändern des Phasenübergangsmaterials (26) von einem unterkühlten Zustand in einen festen Zustand zu initiieren.

13. Verfahren nach Anspruch 12, wobei:
das Auslösen des Aktuators (30) das Bestimmen eines Auslösezeitpunktes als Reaktion auf das Umgebungstemperaturprofil und das Auslösen des Aktuators (30) zu dem Auslösezeitpunkt umfasst.

14. Verfahren nach Anspruch 12, ferner Folgendes umfassend:
Betreiben eines Kondensatorgebläses (28) als Reaktion auf das Bestimmen, dass das Umgebungstemperaturprofil nicht in dem Unterkühlen des Phasenübergangsmaterials (26) resultiert; wobei das Verfahren ferner insbesondere Folgendes umfasst:
Betreiben der Kälteanlage als Reaktion auf das Bestimmen, dass das Umgebungstemperaturprofil nicht in dem Unterkühlen des Phasenübergangsmaterials (26) resultiert und dass das Laufen des Kondensatorgebläses (28) nicht in dem Unterkühlen des Phasenübergangsmaterials (26) resultiert; wobei:
das Betreiben der Kälteanlage insbesondere das Kühlen des Phasenübergangsmaterials (26) mit Kühlungsmittel umfasst.

15. Verfahren nach Anspruch 12, wobei:
das Bestimmen, ob das Umgebungstemperaturprofil in dem Unterkühlen des Phasenübergangsmaterials (26) resultiert, das Vorhersagen eines Nachttemperaturprofils in Reaktion auf Klimazonendaten, Tagestemperatur und einer Temperatur des Phasenübergangsmaterials (26) umfasst.

## Revendications

1. Système de climatisation comprenant :
un système de refroidisseur comportant un compresseur (10), un condenseur (12), un dispositif de détente (14) et un évaporateur (16) ;
un matériau à changement de phase (26) en communication thermique avec le condenseur (12) ;
un actionneur (30) accouplé au matériau à changement de phase (26) ; et
un dispositif de commande (32) fournissant un signal de déclenchement à l'actionneur (30) pour débuter un changement du matériau à changement de phase (26) d'un état super-refroidi à un état solide.

2. Système de climatisation selon la revendication 1, dans lequel :
le condenseur (12) est incorporé dans le matériau à changement de phase (26).

3. Système de climatisation selon la revendication 1, comprenant en outre :
un capteur de température ambiante (36) fournissant un signal de température ambiante au dispositif de commande (32).

4. Système de climatisation selon la revendication 1, comprenant en outre :
un capteur de matériau à changement de phase (26) fournissant un signal de température de matériau à changement de phase (26) au dispositif de commande (32).

5. Système de climatisation selon la revendication 1, dans lequel :
le matériau à changement de phase (26) comporte une voie d'air interne (40) pour permettre à de l'air ambiant de s'écouler à travers le matériau à changement de phase (26), le système de climatisation comprenant en particulier :
un ventilateur (26) pour aspirer de l'air à travers la voie d'air (40).

6. Système de climatisation selon la revendication 1, dans lequel :
le matériau à changement de phase (26) comporte une conduite d'alimentation en liquide de refroidissement (42) en communication thermique avec le matériau à changement de phase (26), la conduite d'alimentation en liquide de refroidissement (42) étant accouplée au système de refroidisseur.

7. Système de climatisation selon la revendication 1, dans lequel :
l'actionneur (30) génère une onde sonore pour débuter un changement du matériau à changement de phase (26) de l'état super-refroidi à l'état solide.

8. Système de climatisation selon la revendication 1, dans lequel :
l'actionneur (30) comporte un matériau à changement de phase gelé, le matériau à changement de phase gelé étant placé en contact avec le matériau à changement de phase (26) pour débuter un changement du matériau à changement de phase (26) de l'état super-refroidi à l'état solide, dans lequel
l'actionneur (30) comporte en particulier une vanne (54) séparant le matériau à changement de phase gelé du matériau à changement de phase (26), le dispositif de commande (32) étant configuré pour ouvrir la vanne (54) pour débuter un changement du matériau à changement de phase (26) de l'état super-refroidi à l'état solide.

9. Système de climatisation selon la revendication 1, dans lequel :
le dispositif de commande (32) est configuré pour prédire un profil de température nocturne en réponse à des données de zone de climat et une température ambiante ; et
le dispositif de commande (32) est configuré pour déterminer si le matériau à changement de phase (26) super-refroidira en réponse au profil de température nocturne.

10. Système de climatisation selon la revendication 9, dans lequel :
le dispositif de commande (32) est configuré pour fournir le signal de déclenchement à l'actionneur (30) en réponse au profil de température nocturne.

11. Système de climatisation selon la revendication 9, dans lequel :
le matériau à changement de phase (26) comporte une voie d'air interne (40) pour permettre à de l'air ambiant de s'écouler à travers le matériau à changement de phase (26) ; et
le dispositif de commande (32) est configuré pour activer un ventilateur (28) pour aspirer de l'air à travers la voie interne (40) pour super-refroidir le matériau à changement de phase (26) lorsque le dispositif de commande (32) détermine que le matériau à changement de phase (26) ne super-refroidira pas en réponse au profil de température nocturne ; ou dans lequel :
le matériau à changement de phase (26) comporte une conduite d'alimentation en liquide de refroidissement (42) en communication thermique avec le matériau à changement de phase (26), la conduite d'alimentation en liquide de refroidissement (42) étant accouplée au système de refroidisseur ; et
le dispositif de commande (32) est configuré pour activer le système de refroidisseur pour refroidir la conduite d'alimentation en liquide de refroidissement (42) pour super-refroidir le matériau à changement de phase (26), lorsque le dispositif de commande (32) détermine que le matériau à changement de phase (26) ne super-refroidira pas en réponse au profil de température nocturne.

12. Procédé de fonctionnement d'un système de climatisation ayant un système de refroidisseur comportant un compresseur (10), un condenseur (12), un dispositif de détente (14) et un évaporateur (16), un matériau à changement de phase (26) en communication thermique avec le condenseur (12), et un actionneur (30) accouplé au matériau à changement de phase (26), le procédé comprenant :
le fait de déterminer si un profil de température ambiante aboutira à un super-refroidissement du matériau à changement de phase (26) ; et
en réponse à la détermination, le déclenchement de l'actionneur (30) pour débuter un changement du matériau à changement de phase (26) d'un état super-refroidi à un état solide.

13. Procédé selon la revendication 12, dans lequel :
le déclenchement de l'actionneur (30) comporte la détermination d'une heure de déclenchement en réponse au profil de température ambiante et le déclenchement de l'actionneur (30) à l'heure du déclenchement.

14. Procédé selon la revendication 12, comprenant en outre :
le lancement d'un ventilateur de condenseur (28) en réponse à la détermination que le profil de température ambiante n'aboutira pas à un super-refroidissement du matériau à changement de phase (26) ; dans lequel le procédé comprend en outre en particulier
le lancement du système de refroidisseur en réponse à la détermination que le profil de température ambiante n'aboutira pas à un super-refroidissement du matériau à changement de phase (26) et le lancement du ventilateur de condenseur (28) n'aboutira pas à un super-refroidissement du matériau à changement de phase (26) ; dans lequel :
le lancement du système de refroidisseur comporte en particulier le refroidissement du matériau à changement de phase (26) avec un liquide de refroidissement.

15. Procédé selon la revendication 12, dans lequel :
le fait de déterminer si le profil de température ambiante aboutira à un super-refroidissement du matériau à changement de phase (26) comporte la prédiction d'un profil de température nocturne en réponse à des données de zone de climat, une température de journée et une température de matériau à changement de phase (26).
